# EUROPÄISCHE PATENTSCHRIFT

(11) **EP 1 305 122 B1**
(45) Veröffentlichungstag und Bekanntmachung des Hinweises auf die Patenterteilung: **16.02.2005**
(21) Anmeldenummer: 01969463.7
(22) Anmeldetag: 21.07.2001
(51) Int. Cl.: B21B 1/34, B21B 1/26, B21B 37/74, C21D 8/02

(54) **PRODUKTIONSVERFAHREN UND -ANLAGE ZUR ERZEUGUNG VON DÜNNEN FLACHPRODUKTEN**
PRODUCTION METHOD AND INSTALLATION FOR PRODUCING THIN FLAT PRODUCTS
PROCEDE ET INSTALLATION DE FABRICATION DE PRODUITS PLATS MINCES

(30) Priorität: 05.08.2000 DE 10038292
(43) Veröffentlichungstag der Anmeldung: 02.05.2003
(73) Patentinhaber: SMS Demag Aktiengesellschaft, 40237 Düsseldorf (DE)
(72) Erfinder: WEHAGE, Harald, 38871 Isenburg (DE); SKODA-DOPP, Ulrich, 47051 Duisburg (DE); BREUER, Michael, 57271 Hilchenbach (DE); HAFER, Joachim, 57080 Siegen (DE)
(74) Vertreter: Valentin, Ekkehard
(86) Internationale Anmeldenummer: PCT/EP2001/008444
(87) Internationale Veröffentlichungsnummer: WO 2002/011915

(56) Entgegenhaltungen:
- EP-A- 0 823 294
- DE-C- 19 758 108
- STREISSELBERGER A: "VERFAHREN DER TM-BEHANDLUNG MIT BESCHLEUNIGTER KÜHLUNG ZUR HERSTELLUNG VON GROBBLECH AUS BAUSTÄHLEN" STAHL UND EISEN, VERLAG STAHLEISEN GMBH. DÜSSELDORF, DE, Bd. 111, Nr. 5, 15. Mai 1991 (1991-05-15), Seiten 65-73,164, XP000205483 ISSN: 0340-4803
- SÖRGEL G: "RECHNERGEFÜHRTES THERMOMECHANISCHES WALZEN IN GROBBLECHSTRASSEN" STAHL UND EISEN, VERLAG STAHLEISEN GMBH. DÜSSELDORF, DE, Bd. 107, Nr. 20, 5. Oktober 1987 (1987-10-05), Seiten 921-926,82-926, XP002102694 ISSN: 0340-4803
- WEHAGE H ET AL: "ENTWICKLUNGSTRENDS BEIM WARMFLACHWALZEN UND MÖGLICHKEITEN ZUR STICHPLANOPTIMIERUNG" STAHL UND EISEN, VERLAG STAHLEISEN GMBH. DÜSSELDORF, DE, Bd. 118, Nr. 10, 14. Oktober 1998 (1998-10-14), Seiten 37-44,139, XP000791714 ISSN: 0340-4803
- GINZBURG V B ET AL: "HEAT CONSERVATION BETWEEN ROUGHING AND FINISHING TRAINS OF HOT STRIP MILLS" IRON AND STEEL ENGINEER, ASSOCIATION OF IRON AND STEEL ENGINEERS. PITTSBURGH, US, Bd. 63, Nr. 4, 1. April 1986 (1986-04-01), Seiten 29-39, XP002063816 ISSN: 0021-1559

## Beschreibung

Die Erfindung betrifft ein Verfahren und eine Anlage zum Erzeugen von Flachprodukten aus Stahl einschließlich großer Breite aus stranggegossenen Brammen großer oder mittlerer Dicke oder aus Dünnsträngen in einer ein- oder mehrgerüstigen Vorstraße, einem Rollgang zum Transportieren des Flachproduktes und zum Reversieren; über einen mit klappbaren, Wärmeisolierenden mit Abdeckhauben versehenen Rollgangsabschnitt, einer induktiven Erwärmungseinrichtung zum geregelten Anwärmen von Vorbändern auf eine definierte Temperatur über die Vorbandlänge und -breite, in einer mehrgerüstigen Fertigstraße, mit einem Auslaufrollgang mit Einrichtungen zum Kühlen des Flachproduktes sowie in nachgeordneten Wickelmaschinen zum Aufwickeln des Fertigbandes, wobei durch austenitisches, austenitisch-ferritisches oder ferritisches Walzen niedrig gekohlter oder tiefgekohlter Stähle ein feinkörniges Gefüge der Korngrößenklassen 6- 10 gemäß DIN 50601 erzeugt wird, und das Walzen im Zweiphasengebiet in der Fertigstraße bei einer Gesamtabnahme bis etwa 80% erfolgt, um hohe Festigkeitswerte zu erreichen.

Das eingangs bezeichnete Verfahren ist aus der DE 197 58 108 C1 bekannt. Dadurch wird angestrebt, in einem Verfahren das austenitische, austenitisch-ferritische und das ferritische Walzen insgesamt zu erfassen. Gleichzeitig soll ohne einen Reversierbetrieb endlos voll kontinuierlich gewalzt werden können. Dazu wird eine regelbare Schutzgasatmosphäre vor Erreichen der eingerüstigen Vorstraße zum Kühlen oder Erwärmen oder auf Halten der Temperatur angewendet werden. Außerdem werden die Kanten des Warmbands nachgewärmt. Das Verfahren wird daher mit speziellen Eigenarten betrieben.

Die der Erfindung zugrundeliegende Aufgabe besteht darin, ein Herstellverfahren für das halbwarme Walzen von dünnem Band aus Kohlenstoffstählen mit mittleren Kohlenstoffgehalten und legierten Einsatz- und Vergütungsstählen 'im Zweiphasengebiet (Austenit-Ferrit) zu schaffen, sowie eine Anlage zum Herstellen solcher Stähle vorzuschlagen.

Die gestellte Aufgabe wird erfindungsgemäß dadurch gelöst, dass in der einoder zweigerüstigen Vorstraße eine oder mehrere Brammen aus Kohlenstoffstählen mit mittleren Kohlenstoffgehalten von ca. 0,2 bis 0,8 % oder legierten Einsatz- oder Vergütungsstählen zweistufig mit einer Pause zum Zwischenkühlen durch Reversieren auf dem Rollgang zu einem bzw. mehreren Vorbändem gewalzt werden, die Vorbänder durch die kombinierte Wirkung der Abdeckhauben und der Erwärmungseinrichtung auf eine definierte Temperatur über die Länge und Breite erwärmt und in der mehrgerüstigen Fertigstraße im Zweiphasengebiet zu dünnen, hochfesten Fertigbändern gewalzt werden, wobei durch die im oberen Austenitgebiet liegende Walztemperatur der ersten Umformstufe in der Vorstraße bei einer Gesamtabnahme von 40 bis 70% das Stranggussgefüge in ein Walzgefüge durch vollständige Rekristallisation umgewandelt wird, und wobei durch das feinkömige und zum Teil verfestigte Gefüge die Umwandlungs-Starttemperatur des Übergangs in das Zweiphasengebiet angehoben und um die Umformwiderstände in der Fertigstraße zu senken, die Umwandlungszeit verkürzt wird, und dass je nach Dicke und Lage des Vorbandes, der Dicke des Fertigbandes, der Einzugsgeschwindigkeit in die Fertigstraße und der Kühlwirkung eines Zunderwäschers vor der Fertigstraße das Vorband über seine Länge und Breite durch die kombinierte Wirkung der geschlossenen Abdeckhauben und einer induktiven Erwärmungseinrichtung gleichmäßig auf eine gezielte Temperatur so eingestellt wird, dass das Walzen in der Fertigstraße bei allen Stichen im Zweiphasengebiet erfolgt. Dadurch kann ein Walzen gesichert im Zweiphasengebiet stattfinden.

Eine Weiterbildung sieht vor, dass die Starttemperatur der zweiten Umformstufe, die Pausenzeit zwischen erster und zweiter Umformstufe in der Vorstraße und die Gesamtwalzzeit der zweiten Umformstufe so optimiert werden, dass während des Transportierens des Vorbandes von der Vorstraße zur Fertigstraße keine weitere Pause zum Zwischenkühlen durch Reversieren auf die Eintrittstemperatur des Vorbandes in die Fertigstraße erforderlich ist.

Weitere vorteilhafte Verfahrensschritte bestehen darin, dass das Vielfache der Gesamtzeit für die zweite Umformstufe in der Vorstraße, das Transportieren des Vorbandes zur Fertigstraße und das Walzen in der Fertigstraße, welche kleiner ist als die Pausenzeit zwischen erster und zweiter Umformstufe in der Vorstraße, die Anzahl der Brammen bestimmt, die in der Vorstraße in der ersten Umformstufe hintereinander bei geöffneten Abdeckhauben gewalzt und hinter dem Vorgerüst zum Zwischenkühlen auf dem Rollgang reversiert werden.

Eine andere Ausgestaltung sieht vor, dass die nach der ersten Umformstufe in der Vorstraße zwischenkühlenden Zwischenbänder nach Ablauf der Zwischenkühlzeit des ersten Zwischenbandes bis auf dieses selbst als Gruppe oder einzeln hintereinander von der Position auf dem Rollgang hinter dem Vorgerüst auf eine Position auf de Rollgang vor dem Vorgerüst ohne Stichabnahme zum weiteren Zwischenkühlen durch Reversieren gefahren werden und anschließend das erste Zwischenband in der zweiten Umformstufe auf dem Vorgerüst gewalzt wird, wonach die anderen Zwischenbänder bei gleicher Kühlzeit folgen.

Weiterhin wird vorgeschlagen, dass das Reversieren der Zwischenbänder beim Zwischenkühlen hinter und vor dem Vorgerüst durch separat angetriebene, synchronisierte Rollgangsgruppen gewährleistet wird.

Eine Verbesserung besteht darin, dass das in der Fertigstraße im Zweiphasengebiet gewalzte Fertigband auf dem Auslaufrollgang auf eine definierte Wickeltemperatur gekühlt wird, um die beim Walzen erzielte Kombination mechanischer Eigenschaften zu erhalten oder qualitativ zu steigern.

Das Verfahren ist generell geeignet, das austenitische, austenitisch-ferritische und ferritische Walzen niedrig gekohlter und tiefgekühlter Stähle auszuführen.

Die Erfindung betrifft auch eine Anlage zum Erzeugen von Flachprodukten aus Stahl, und löst die angegebene Aufgabe für Flachprodukte, einschließlich großer Breite, aus stranggegossenen Brammen, und besteht aus einer Gießmaschine zum Erzeugen von stranggegossenen Brammen, einer Schere zum Teilen der Brammen, einem Anwärm- bzw. Ausgleichsofen zum Anwärmen kalt oder warm eingesetzter Brammen oder Ausgleichen von Dünnsträngen auf Walz-Starttemperatur, einem Zunderwäscher zum Entzundern der angewärmten oder ausgeglichenen Stranggussbrammen, einer ein- oder zweigerüstigen Vorstraße mit abdeckbarem Rollgang, einer ein- oder zweigerüstigen Vorstraße mit abdeckbarem Rollgang, einem Rollgang mit separat angetriebenen und synchronisierten Rollgangsabschnitten zum Transport der Brammen bzw. des Flachproduktes in Walzrichtung und ggffs. zum Reversieren von Zwischenbändem beim Zwischenkühlen, einer ein- oder zweigerüstigen Vorstraße mit oder ohne Stauchgerüst zum Auswalzen von Stranggussbrammen zu Vorbändern in mindestens einer Walzstufe, einem mit klappbaren, wärmeisolierenden Abdeckhauben versehenen Rollgangsabschnitt, einer Richteinheit zum Richten der Vorbänder, einer induktiven Erwärmungseinrichtung zur geregelten Anwärmung der Vorbänder auf eine definierte Temperatur über die Vorbandlänge und -breite, einer Schere zum Schopfen der Vorbandköpfe oder zum Häckseln, einem Zunderwäscher zum Entzundern der Vorbänder, einer mehrgerüstigen Fertigstraße zum Auswalzen der Vorbänder zu Fertigbändern, einem Auslaufrollgang mit einer Einrichtung zum Kühlen der Fertigbänder und mit einer oder mehreren der Fertigstraße nachgeordneten Wickelmaschinen zum Aufwickeln des Fertigbandes.

Zur Erzeugung warmgewalzter Bänder werden als Ausgangsmaterial Brammen mit einer Dicke größer 150 mm oder Dünnbrammen mit Dicken zwischen 40 und 150 mm verwendet.

Im Falle einzelner Brammen großer oder mittlerer Dicke bestehen die Walzanlagen im allgemeinen aus einer ein- oder mehrgerüstigen Vorstraße, in der die Brammen in mehreren Walzstichen im Reversierbetrieb reduziert werden, sowie einer mehrgerüstigen Fertigstraße oder einem Steckelgerüst. Die Vorstraße ist bezüglich ihrer Leistungsfähigkeit so ausgelegt, dass Stranggussbrammen mit Anstichtemperaturen von 1250 °C bis 1050 °C zu Vorbändern in einer Walzstufe ausgewalzt werden können. Die Abstände zwischen Anwärmofen, dem oder den Gerüsten der Vorstraße und der Fertigstraße sind für den Reversierbetrieb einzelner Brammen ausgelegt, d. h. ein freier Auslauf des Walzgutes ist gewährleistet. Ist eine Coilbox vor der Fertigstraße zum Aufwickeln des Vorbandes vorhanden, kann der Abstand zwischen dem oder den Gerüsten der Vorstraße und der Fertigstraße reduziert werden. Die annähernd gleichmäßige Temperatur über der Warmbandlänge wird entweder mittels einer Coilbox zwischen Vor- und Fertigstraße, durch mit Wärmedämmhauben abgedeckten Rollgangsabschnitten, durch Speed-up in der Fertigstraße oder durch Haspelöfen vor und hinter dem Steckelgerüst erreicht. In diesen Fällen handelt es sich um einen diskontinuierlichen Prozess, d. h. Vor- und Fertigstraße arbeiten im Allgemeinen entkoppelt und walzen einzelne Brammen. Das Walzen in der Vorstraße erfolgt in einer Stufe.

Im Falle von Dünnsträngen kann zwischen Walzanlagen mit Brammendicken von 40 bis 65 mm oder größer als 65 mm als Ausgangsmaterial unterschieden werden. Erstere bestehen aus einer mehrgerüstigen Fertigstraße, einem Auslaufrollgang mit Einrichtungen zum Kühlen des Warmbandes auf Wickeltemperatur und Wickelmaschinen zum Aufwickeln des Warmbandes. Das Walzen erfolgt in einer Stufe. Die Anlagen für Dünnbrammen größer als 65 mm bestehen auf Grund der bei gleicher Enddicke notwendigen größeren Verformungsarbeit aus einer ein- oder mehrgerüstigen Vorstraße für einen oder mehrere Walzstiche in Richtung Anlagenende und einer mehrgerüstigen Fertigstraße sowie einem Auslaufrollgang mit Einrichtungen zum Kühlen des Warmbandes auf Wikkeltemperatur und Wickelmaschinen zum Aufwickeln des Warmbandes. Zwischen Vor- und Fertigstraße befinden sich Einrichtungen zum Kühlen oder Erwärmen und/oder zum Wickeln des Vorbandes, die die notwendige Eintrittstemperatur in die Fertigstraße gewährleisten. Arbeiten Vor- und Fertigstraße gekoppelt, erfolgt das Walzen in einer Walzstufe. Arbeiten Vor- und Fertigstraße entkoppelt, erfolgt das Walzen in jeweils einer Walzstufe.

Die beschriebenen Walzanlagen werden im allgemeinen so ausgelegt und betrieben, dass die Umformung in den einzelnen Stichen sowohl in der Vor- als auch in der Fertigstraße für alle Stähle voll austenitisch oder in der Fertigstraße für niedrig gekohlte Stähle auch gemischt austenitisch-ferritisch oder für tiefentkohlte Stähle austenitisch-ferritisch oder rein ferritisch erfolgt.

Beim austenitischen Walzen liegt die Walztemperatur in allen Stichen oberhalb der GOS-Linie des Eisenkohlenstoff-Diagramms. Zur Erzielung eines feinkörnigen Gefüges liegt die Endwalztemperatur in den letzten Gerüsten der Fertigstraße nahe oberhalb der GOS-Linie.

Beim austenitisch-ferritischen Walzen (Zweiphasengebiet) von niedrig gekohlten Stählen mit einem Kohlenstoffgehalt zwischen 0,03 bis 0,07 % liegt die Walztemperatur in den letzten oder allen Gerüsten der Fertigstraße unterhalb der GOS-Linie im Bereich von ca. 810 bis 890 °C. Dies kann durch Absenken der Ofenaustrittstemperatur der Brammen von ca. 1250 auf ca. 1050 °C erreicht werden, wodurch sich der Anteil der in Lösung befindlichen Mikrolegierungselemente verringert und die Qualität des Warmbandes herabsetzt. Es ist auch ein Absenken der Walzgeschwindigkeit ohne ein Absenken der Ofenaustrittstemperatur möglich, wodurch eine größere Abkühlung des Walzgutes erfolgt. Als nachteilig erweist sich eine verringerte Produktion und ein größerer Temperaturunterschied zwischen Bandkopf und -ende. Eine Kombination beider Maßnahmen ist mit den genannten Nachteilen möglich.

Beim ferritischen Walzen von tiefentkohlten Stählen erfolgt das Absenken der Endwalztemperatur auf minimal 720 °C durch die bereits beim austenitisch-ferritischen Walzen genannten Maßnahmen einschließlich ihrer Nachteile.

Das Abkühlen vom austenitschen Temperaturbereich in das Zweiphasengebiet oder in den ferritischen Temperaturbereich kann zwischen den Stichen mit Wasser erfolgen, wodurch die Bandkanten stärker abkühlen, was die Gleichmäßigkeit der Qualität über die Bandbreite negativ beeinflusst. Möglich ist z. B. bei entkoppelter Vor- und Fertigstraße auch ein Abkühlen an Luft durch Reversieren auf dem Rollgang zwischen Vor- und Fertigstraße. Während dieser Zeit kann in der Regel in der Vorstraße nicht gewalzt werden, da das abkühlende, reversierte Vorband den Rollgang zwischen Vor- und Fertigstraße belegt. Folglich ist die Produktion gering.

Beim austenitisch-ferritischen und ferritischen Walzen werden die tiefen Temperaturen erst in den letzten zwei bis drei Walzstichen erreicht, wodurch die Abnahme im Ziel-Temperaturgebiet gering ist. Der Gefügeumwandlungspunkt liegt innerhalb der Fertigstraße und verschiebt sich durch Temperatureinflüsse zwischen den Gerüsten. Das führt zu Walzkrafteinbrüchen durch den niedrigeren Umformwiderstand des Materials nach Übergang in den ferritischen Temperaturbereich. Das ist nachteilig für Walzenbiege- und Walzenanstellsysteme zur Gewährleistung von Dicke, Profil und Kontur sowie Planheit des Fertigbandes, da diese Systeme die gemessene Walzkraft als Ausgangssignal verwenden.

Da die Gefügeumwandlung Austenit in Ferrit zeitabhängig ist, liegen einige Stiche immer im Zweiphasengebiet Austenit/Ferrit. Das Walzen von dünnen Fertigbändern nach dieser Technologie ist auf Grund zulässiger Gerüst- und Antriebsbelastungen auf niedrig gekohlte und tiefentkohlte Stähle mit insgesamt niedrigem Umformwiderstand beschränkt.

Beim Walzen von Kohlenstoffstählen mit mittleren Kohlenstoffgehalten von ca. 0.2 bis 0,8 % C sowie legierten Einsatz- und Vergütungsstählen im Zweiphasengebiet werden Gefüge und mechanische Eigenschaften erzielt, die dem wärmebehandelten Zustand nahezu entsprechen. Es werden sehr hohe Zugfestigkeits- und Streckgrenzenwerte (> 1000 N/mm²) erreicht. Im Vergleich zu den niedrig gekohlten und tiefentkohlten Stählen sind diese Stähle jedoch durch viel höhere Umformwiderstände gekennzeichnet.

Die Umwandlungs-Starttemperaturen dieser Stähle liegen zu dem tiefer, d. h. je nach chemischer Zusammensetzung im Bereich von 830 bis 730 °C. Während sich mit steigender Anwärmtemperatur der Umwandlungspunkt zu tieferen Temperaturen verschiebt, bewirkt ein steigender Umformgrad beim Walzen im Austenitgebiet ein Anheben des Umwandlungspunktes zu höheren Temperaturen. Gleiches gilt für die Temperaturen des Umwandlungsendes. Das Zweiphasengebiet dieser Stähle liegt je nach chemischer Zusammensetzung im Temperaturbereich von 830 - 630 °C. Mit sinkender Temperatur steigt der Umformwiderstand. Ein Absinken des Umformwiderstands unterhalb der Umwandlungsstarttemperatur ist wesentlich schwächer ausgeprägt als bei den niedrig gekohlten oder tiefentkohlten Stählen bzw. gar nicht zu verzeichnen.

Deshalb ist ein halbwarmes Walzen dünner Bänder aus Kohlenstoffstählen mit mittlerem Kohlenstoffgehalt oder aus Einsatz- und Vergütungsstählen mit einer Gesamtabnahme von 50 bis 80 % im Zweiphasengebiet auf industriellen Anlagen beim aktuellen Stand der Technik bei großen Bandbreiten (> 1250 mm) ohne Überschreiten zulässiger Gerüst- und Antriebsbelastungen nicht möglich.

Das Herstellverfahren ist speziell für das Walzen von dünnem Band aus Kohlenstoffstahl mit mittlerem Kohlenstoffgehalt, legierten Einsatz- und Vergütungsstählen mit hoher Festigkeit im Zweiphasengebiet gestaltet, ermöglicht jedoch auch die Technologien des austenitischen Walzens und das austenitisch-ferritische sowie ferritische Walzen niedrig gekohlter und tiefentkohlter Stähle.

Mit der Produktionsanlage können stranggegossene Brammen einschließlich großer Breiten in einer ein- oder mehrgerüstigen Vorstraße zweistufig mit einer Pause zum Zwischenkühlen durch Reversieren auf dem Rollgang zu einem oder mehreren Vorbändem gewalzt, die Vorbänder durch die kombinierte Wirkung von wärmeisolierten Abdeckhauben und einer induktiven Erwärmungseinrichtung auf eine definierte Temperatur über Länge und Breite erwärmt und in einer mehrgerüstigen Fertigstraße im Zweiphasengebiet zu dünnen hochfesten Fertigbändern gewalzt werden.

Erforderlich sind je nachdem ein oder zwei Duo- oder Quartogerüste als Vorstraße, die auch für das Walzen von Vorbändern großer Breite bei tiefen Temperaturen ausgelegt sind, sowie Quarto- und/oder Sextogerüste als Fertigstraße, die auch für das Walzen von Fertigbändern großer Breite im Zweiphasengebiet ausgelegt sind. Die Gerüste verfügen über die bei der Warm- und Halbwarrhumformung erforderlichen Stellglieder und Regelkreise zur gezielten Temperaturführung und zur Gewährleistung der geforderten Fertigprodukttoleranzen für Dicke, Profil, Planheit und werkstofftechnische sowie mechanische Eigenschaften.

Für die gezielte Beeinflussung der Walztemperatur in der Vorstraße sind vor und hinter der ein- oder zweigerüstigen Vorstraße Rollgänge mit separat angetriebenen, synchronisierten Rollgangsabschnitten erforderlich. Für die gezielte Beeinflussung der Walztemperatur in der Fertigstraße sind vor der Fertigstraße ein Rollgangsabschnitt mit klappbaren, wärmeisolierenden Abdeckhauben und eine Induktionsanlage erforderlich.

In der Zeichnung sind Ausführungsbeispiele der Erfindung dargestellt, die nachstehend näher erläutert werden.

Es zeigen:

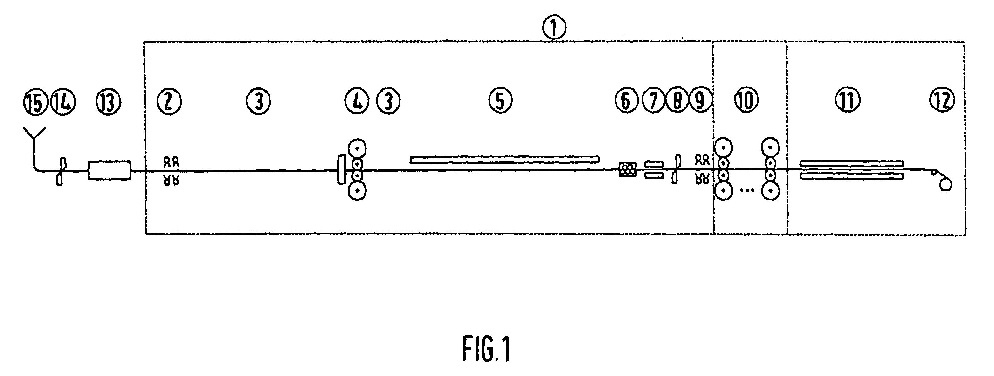

- Fig. 1: eine Draufsicht auf die Herstellanlage im Grundriss,
- Fig. 2: ein Diagramm über den Temperaturverlauf der Zweiphasenwalzung ohne induktive Anwärmung des Vorbandes über die Vorbandlänge,
- Fig. 3: das Diagramm über den Temperaturverlauf der Zweiphasenwalzung mit induktiver Anwärmung des Vorbandes über die Vorbandlänge und
- Fig. 4: ein Diagramm als Zeitschema der Mehrstückwalzung von Brammen.

Die Produktionsanlage besteht aus einer Gießmaschine 15 zum Erzeugen von Stranggussbrammen großer oder mittlerer Dicke oder von Dünnsträngen, einer Schere 14 zum Teilen des Gießstranges in Brammen, einem Anwärm- bzw. Ausgleichsofen 13 zum Anwärmen der kalt oder warm eingesetzten Stranggussbrammen oder zum Ausgleichen der Dünnstränge auf Walz-Starttemperatur, einem Zunderwäscher 2 zum Entzundern der angewärmten oder ausgeglichenen Stranggussbrammen, einem Rollgang 3 zum Transport der Brammen bzw. des Walzgutes in Walzrichtung und zum Reversieren von Zwischenbändern beim Zwischenkühlen, einer ein- oder zweigerüstigen Vorstraße 4 zum Auswalzen von Stränggussbrammen zu Vorbändern in mindestens zwei Walzstufen, einem mit klappbaren, wärmeisolierenden Abdeckhauben versehenen Rollgangsbereich 5, einer Richteinheit 6 zum Richten der Vorbänder, einer induktiven Erwärmungseinrichtung 7 zur geregelten Anwärmung der Vorbänder auf eine definierte Temperatur über die Vorbandlänge und - breite, einer Schere 8 zum Schopfen der Vorbandköpfe oder zum Häckseln, einen Zunderwäscher 9 zum Entzundern der Vorbänder, einer mehrgerüstigen Fertigstraße 10 zum Auswalzen der Vorbänder zu Fertigbändern, einem Auslaufrollgang mit einer Einrichtung 11 zum Kühlen der gewalzten Fertigbänder und mit einer oder mehreren der Fertigstraße 10 nachgeordneten Wickelmaschinen 12 zum Aufwickeln des Fertigbandes.

Der Ablauf des Walzprozesses beginnt mit dem Ziehen der auf eine obere Austenittemperatur erwärmten oder ausgeglichenen Brammen aus dem Ofen 13 und dem anschließenden Entzundern der Brammenoberfläche mittels des Zunderwäschers 2.

Es folgen das Walzen der Brammen in der Vörstraße 4 in einer ersten Umformstufe und das Abkühlen der Zwischenbänder durch Reversieren der Zwischenbänder auf Rollgangsabschnitten 3 vor der bzw. und/oder hinter der Vorstraße 4 auf eine Temperatur nahe oberhalb der GOS-Linie des Eisenkohlenstoffdiagramms, d. h. nahe oberhalb der Starttemperatur der Umwandlung von Austenit in Ferrit. Anschließend werden die Zwischenbänder in einer zweiten Umformstufe auf der Vorstraße 4 zu Vorbändern ausgewalzt, wobei die Walztemperatur nahe oberhalb der Umwandlungs-Starttemperatur liegt.

Vorzugsweise ist vorgesehen, dass Kohlehstoffstähle, legierte Einsatz- und Vergütungsstähle hoher Festigkeit in der ersten Umformstufe mit einer Gesamtabnahme von 40 bis 70 % und in der zweiten Umformstufe mit einer Gesamtabnahme von 60 - 80 % bei hohen Umformwiderständen gewalzt werden.

Dadurch kommt es in der ersten Umformstufe zur Umwandlung des Stranggussgefüges in ein Walzgefüge durch vollständige Rekristallisation und in der zweiten Umformstufe zur Einstellung eines feinkörnigen, zum Teil verfestigten Gefüges der Kornklassen 6 - 10 gemäß DIN 50601.

Durch die erfindungsgemäße zweite Umformstufe wird die Umwandlungsstarttemperatur des Walzgutes vor dem Walzen in der Fertigstraße 10 angehoben und die Umwandlung beschleunigt, was das Walzen dünner Bänder begünstigt, da der Umformwiderstand beim Übergang von Austenit in Ferrit zunächst abnimmt und mit sinkender Umformtemperatur generell ansteigt.

Vorzugsweise ist vorgesehen, dass die Starttemperatur der zweiten Umformstufe in der Vorstraße 4 und die Pausenzeit zwischen erster und zweiter Umformstufe sowie die Gesamtwalzzeit der zweiten Umformstufe so optimiert sind, dass während des Transportes des Vorbandes von der Vorstraße 4 zur Fertigstraße 10 keine weitere Pause zum Zwischenkühlen durch Reversieren erforderlich ist. Während der Pause zur Zwischenkühlung zwischen erster und zweiter Umformstufe sind die klappbaren, wärmeisolierenden Abdeckhauben 5 hoch geklappt, so dass die Zwischenbänder während des Reversierens auf dem Rollgang 3 frei an Luft abkühlen können.

Je nach Dicke und Länge des Vorbandes, der Dicke des Fertigbandes, der Einzugsgeschwindigkeit in die Fertigstraße 10 und der Kühlwirkung des Zunderwäschers 9 vor der Fertigstraße 10 wird das Vorband über seine Länge und Breite durch kombinierte Wirkung der geschlossenen Abdeckhauben 5 und der induktiven Erwärmungseinrichtung 7 gleichmäßig auf eine gezielte Temperatur so erwärmt, dass das Walzen in der Fertigstraße 10 bei allen Stichen im Zweiphasengebiet erfolgt.

Beim Walzen in der zweiten Umformstufe in der Vorstraße 4 kann am Vorbandkopf und/oder -ende jeweils ein Ski nach oben oder unten entstehen, was durch das Walzen bei Temperaturen nahe oberhalb der Umwandlungs-Starttemperatur begünstigt wird. Vor dem Einlauf der Vorbänder in die induktive Erwärmungseinrichtung 7 werden die Vorbandenden in einer Richteinheit 6 gerichtet.

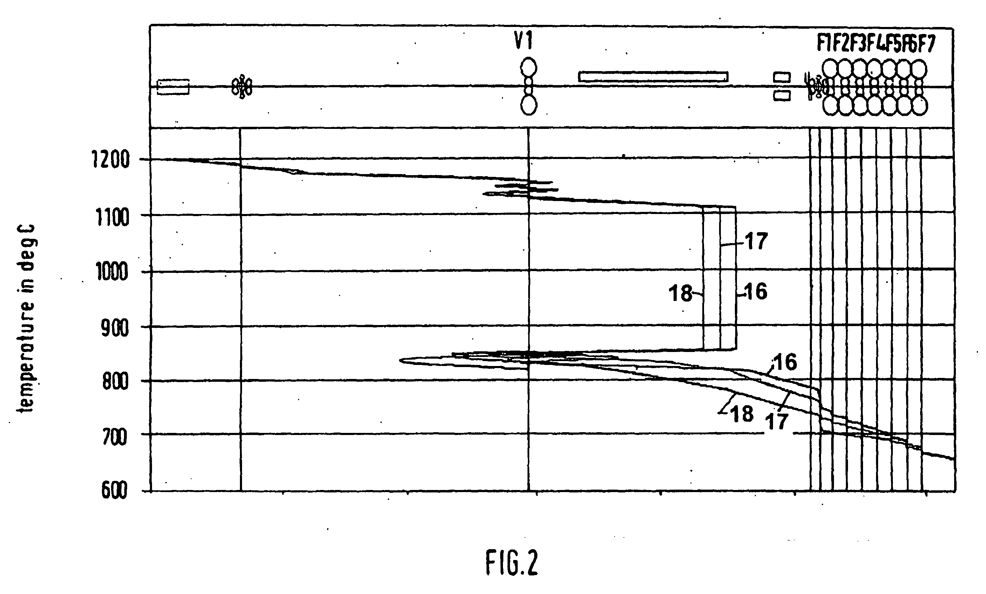

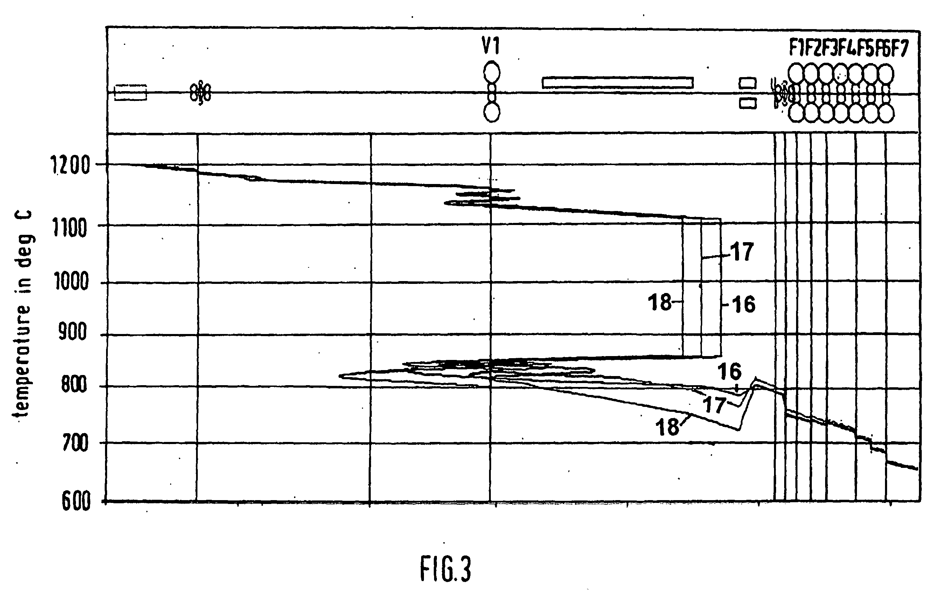

Die Zeichnungsfiguren 2 und 3 zeigen entsprechende Temperaturverläufe jeweils für den Bandkopf 16, die Mitte 17 und das Ende 18 während des Walzprozesses über die gesamte Anlage. Für dünne Bänder im oberen Dickenbereich werden für die Einstellung einer gleichmäßigen Walztemperatur in der Fertigstraße 10 über die Bandlänge nur die heruntergeklappten, wärmeisolierenden Abdeckhauben 5 genutzt (Fig. 2). Die induktive Erwärmungseinrichtung kann zur Kantennachwärmung genutzt werden. Für dünne Bänder im unteren Dickenbereich werden sowohl die heruntergeklappten, wärmeisolierenden Abdeckhauben 5 als auch die induktive Erwärmungseinrichtung 7 genutzt (Fig. 3), um eine gleichmäßige Walztemperatur über Bandlänge und -breite in der Fertigstraße einzustellen.

Vorzugsweise erfolgt das Walzen in der Fertigstraße 10 bei allen Stichen im Zweiphasengebiet bei einer Gesamtabnahme von 50 - 80 %, wodurch für Kohlenstoffstähle mit mittlerem Kohlenstoffgehalt, legierte Einsatz- und Vergütungsstähle hohe Festigkeitswerte größer als 1000 N/mm² erreicht werden.

Während der Pausenzeit der Zwischenkühlung eines Zwischenbandes zwischen der ersten und zweiten Umformstufe in der Vorstraße 4 können erfindungsgemäß eine oder mehrere weitere Brammen zu Zwischenbändem gewalzt werden. Die Zeichnungsfigur 4 zeigt die zeitliche Verschachtelung des Walzprozesses mehrerer Brammen bzw. Bänder. Dabei sind ein Zeitverlauf 19 des Bandkopfes für das erste Band und ein Zeitverlauf 20 des Bandendes für das erste Band gezeigt.

Das Vielfache der Gesamtzeit für die zweite Umformstufe in der Vorstraße 4, den Transport des Vorbandes zur Fertigstraße 10 und das Walzen in der Fertigstraße 10, welche kleiner ist als die Pausenzeit zwischen erster und zweiter Umformstufe in der Vorstraße 4, bestimmt die Anzahl der Brammen, die in der Vorstraße 4 in der ersten Umformstufe hintereinander bei geöffneten Abdeckhauben 5 gewalzt und hinter dem Vorgerüst 4 zum Zwischenkühlen auf dem Rollgang 3 reversiert werden können.

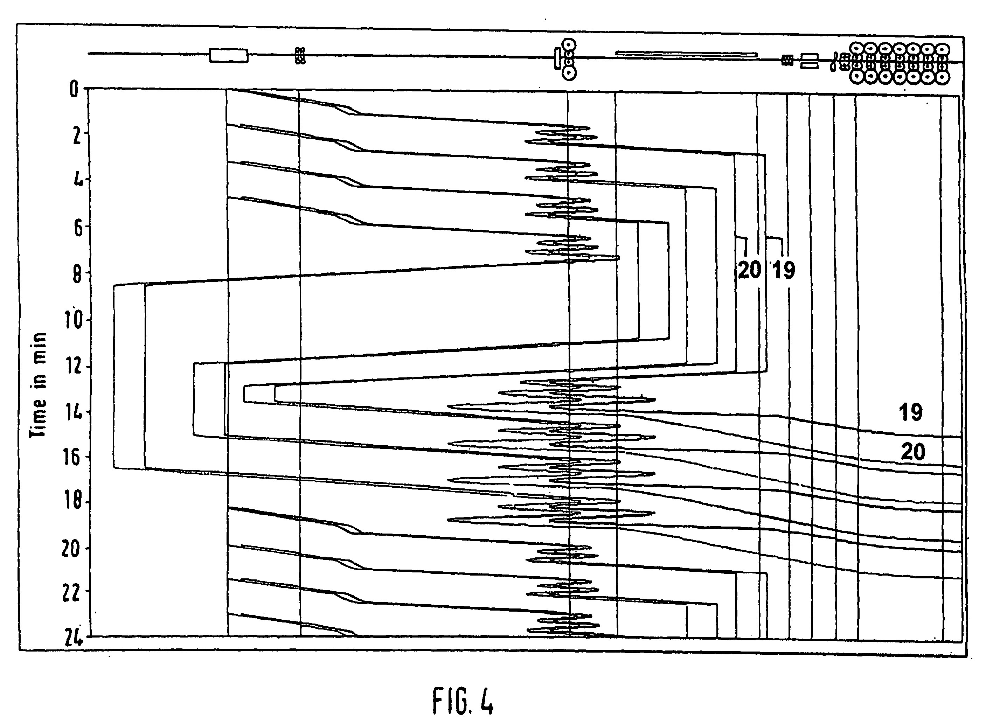

Vorzugsweise ist vorgesehen, dass die nach der ersten Umformstufe in der Vorstraße 4 zwischenkühlenden Zwischenbänder nach Ablauf der Zwischenkühlzeit des ersten Zwischenbandes bis auf.dieses selbst als Gruppe oder einzeln hintereinander von der Position auf dem Rollgang 3 hinter dem Vorgerüst 4 auf eine Position auf dem Rollgang 3 vor dem Vorgerüst 4 ohne Stichabnahme zum weiteren Zwischenkühlen durch Reversieren gefahren werden und anschließend das erste Zwischenband in der zweiten Umformstufe auf dem Vorgerüst 4 gewalzt wird, wonach die anderen Zwischenbänder bei gleicher Kühlzeit folgen (Fig. 4).

Für das Reversieren der Zwischenbänder beim Zwischenkühlen hinter und vor dem Vorgerüst 4 sind separat angetriebene, synchronisierte Rollgangsgruppen vorgesehen.

Nach dem Walzen im Zweiphasengebiet in der Fertigstraße 10 werden die Fertigbänder auf dem Auslaufrollgang 3 in einer Einrichtung zum Kühlen auf eine definierte Wickeltemperatur gekühlt, wodurch die beim Walzen erzielte günstige Kombination mechanischer Eigenschaften erhalten bleibt oder noch qualitativ gesteigert wird.

### Bezugszeichenliste

- 1: Produktionsanlage zum Halbwarmwalzen von hochfesten, dünnen Flachprodukten im Zweiphasengebiet
- 2: Zunderwäscher
- 3: Rollgang
- 4: ein- oder zweigerüstige Vorstraße
- 5: Rollgangsabschnitt mit klappbaren, wärmeisolierenden Abdeckhauben
- 6: Richteinheit
- 7: Induktive Erwärmungseinrichtung
- 8: Schere
- 9: Zunderwäscher
- 10: Mehrgerüstige Fertigstraße
- 11: Einrichtung zum Kühlen des Fertigbandes
- 12: Wickelmaschine
- 13: Anwärm- bzw. Ausgleichsofen
- 14: Schere
- 15: Gießmaschine
- 16: Temperaturverlauf des Bandkopfes
- 17: Temperaturverlauf der Bandmitte
- 18: Temperaturverlauf des Bandendes
- 19: Zeitverlauf des Bandkopfes für das erste Band
- 20: Zeitverlauf des Bandendes für das erste Band

## Patentansprüche

1. Verfahren zum Erzeugen von Flachprodukten aus Stahl, einschließlich großer Breite, aus stranggegossenen Brammen großer oder mittlerer Dicke oder aus Dünnsträngen, in einer ein- oder mehrgerüstigen Vorstraße (4), einem Rollgang (3) zum Transportieren des Flachproduktes und ggfs. zum Reversieren, über einen mit klappbaren, wärmeisolierenden Abdeckhauben versehenen Rollgangsabschnitt (5), einer induktiven Erwärmungseinrichtung (7) zum geregelten Anwärmen von Vorbändem auf eine definierte Temperatur über die Vorbandlänge und - breite, in einer mehrgerüstigen Fertigstraße (10), einem Auslaufrollgang mit Einrichtungen (11) zum Kühlen des Flachproduktes sowie in nachgeordneten Wickelmaschinen (12) zum Aufwickeln des Fertigbandes, wobei durch austenitisches, austenitisch-ferritisches oder ferritisches Walzen niedrig gekohlter oder tiefgekohlter Stähle ein feinkörniges Gefüge der Korngrößenklasse 6 - 10 gemäß DIN 50601 erzeugt wird, und das Walzen im Zweiphasengebiet in der Fertigstraße (10) bei einer Gesamtabnahme bis etwa 80% erfolgt, um hohe Festigkeitswerte zu erreichen,
**dadurch gekennzeichnet,**
in der ein- oder zweigerüstigen Vorstraße (4) eine oder mehrere Brammen aus Kohlenstoffstählen mit mittleren Kohlenstoffgehalten von ca. 0,2 bis 0,8 % oder legierten Einsatz- oder Vergütungsstählen zweistufig mit einer Pause zum Zwischenkühlen durch Reversieren auf dem Rollgang (3) zu einem bzw. mehreren Vorbändern gewalzt werden, die Vorbänder durch die kombinierte Wirkung von Abdeckhauben und Erwärmungseinrichtung (7) auf eine definierte Temperatur über die Länge und Breite erwärmt und in der mehrgerüstigen Fertigstraße (10) im Zweiphasengebiet zu dünnen, hochfesten Fertigbändern gewalzt werden, wobei durch die im oberen Austenitgebiet liegende Walztemperatur der ersten Umformstufe in der Vorstraße (4) bei einer Gesamtabnahme von 40 bis 70% das Stranggussgefüge in ein Walzgefüge durch vollständige Rekristallisation umgewandelt wird, und wobei durch das feinkörnige und zum Teil verfestigte Gefüge die Umwandlungs-Starttemperatur des Übergangs in das Zweiphasengebiet angehoben und um die Umformwiderstände in der Fertigstraße (10) zu senken, die Umwandlungszeit verkürzt wird, und dass je nach Dicke und Länge des Vorbandes, der Dicke des Fertigbandes, der Einzugsgeschwindigkeit in die Fertigstraße (10) und der Kühlwirkung eines Zunderwäschers (9) vor der Fertigstraße (10) das Vorband über seine Länge und Breite durch die kombinierte Wirkung der geschlossenen Abdeckhauben (5) und der induktiven Erwärmungseinrichtung (7) gleichmäßig auf eine gezielte Temperatur so eingestellt wird, dass das Walzen in der Fertigstraße (10) bei allen Stichen im Zweiphasengebiet erfolgt.

2. Verfahren-nach-Anspruch-1,
**dadurch-gekennzeichnet,**
dass die Starttemperatur der zweiten Umformstufe, die Pausenzeit zwischen erster und zweiter Umformstufe in der Vorstraße (4) und die Gesamtwalzzeit der zweiten Umformstufe so optimiert werden, dass während des Transportierens des Vorbandes von der Vorstraße (4) zur Fertigstraße (10) keine weitere Pause zum Zwischenkühlen durch Reversieren auf die Eintrittstemperatur des Vorbandes in die Fertigstraße (10) erforderlich ist.

3. Verfahren nach einem der Ansprüche 1 oder 2,
**dadurch gekennzeichnet,**
**dass** das Vielfache der Gesamtzeit für die zweite Umformstufe in der Vorstraße (4) , das Transportieren des Vorbandes zur Fertigstraße (10) und das Walzen in der Fertigstraße (10) welche kleiner ist als die Pausenzeit zwischen erster und zweiter Umformstufe in der Vorstraße (4), die Anzahl der Brammen bestimmt, die in der Vorstraße (4) in der ersten Umformstufe hintereinander bei geöffneten Abdeckhauben (5) gewalzt und hinter dem Vorgerüst (4) zum Zwischenkühlen auf dem Rollgang (3) reversiert werden.

4. Verfahren nach einem der Ansprüche 1 bis 3,
**dadurch gekennzeichnet,**
**dass** die nach der ersten Umformstufe in der Vorstraße (4) zwischenkühlenden Zwischenbänder nach Ablauf der Zwischenkühlzeit des ersten Zwischenbandes bis auf dieses selbst als Gruppe oder einzeln hintereinander von der Position auf dem Rollgang (3) hinter dem Vorgerüst (4) auf eine Position auf dem Rollgang (3) vor dem Vorgerüst (4) ohne Stichabnahme zum weiteren Zwischenkühlen durch Reversieren gefahren werden und anschließend das erste Zwischenband in der zweiten Umformstufe auf dem Vorgerüst (4) gewalzt wird, wonach die anderen Zwischenbänder bei gleicher Kühlzeit folgen.

5. Verfahren nach einem der Ansprüche 1 bis 4,
**dadurch gekennzeichnet,**
**dass** das Reversieren der Zwischenbänder beim Zwischenkühlen hinter und vor dem Vorgerüst (4) durch separat angetriebene, synchronisierte Rollgangsgruppen gewährleistet wird.

6. Verfahren nach einem der Ansprüche 1 bis 5,
**dadurch gekennzeichnet,**
**dass** das in der Fertigstraße (10) im Zweiphasengebiet gewalzte Fertigband auf dem Auslaufrollgang (3) auf eine definierte Wickeltemperatur gekühlt wird, um die beim Walzen erzielte Kombination mechanischer Eigenschaften zu erhalten oder qualitativ zu steigern.

7. Verfahren nach einem der Ansprüche 1 bis 6,
**gekennzeichnet durch**
das austenitische, austenitisch-ferritische und ferritische Walzen niedrig gekohlter und tiefentkohlter Stähle.

8. Anlage zum Erzeugen von Flachprodukten aus Stahl, einschließlich großer Breite, aus stranggegossenen Brammen, bestehend aus einer Gießmaschine (15), zum Erzeugen von stranggegossenen Brammen, einer Schere (14) zum Teilen der Brammen, einem Anwärm- bzw. Ausgleichsofen (13) zum Anwärmen kalt oder warm eingesetzter Brammen oder Ausgleichen von Dünnsträngen auf Walz-Starttemperatur, einem Zunderwäscher (2) zum Entzundern der angewärmten oder ausgeglichenen Stranggussbrammen, einer ein- oder zweigerüstigen Vorstraße (4) mit abdeckbarem Rollgang (3), einem Rollgang (3) mit separat angetriebenen und synchronisierten Rollgangsabschnitten zum Transport der Brammen bzw. des Flachproduktes in Walzrichtung und gegebenenfalls zum Reversieren von Zwischenbändern beim Zwischenkühlen, einer einoder zweigerüstigen Vorstraße (4) mit oder ohne Stauchgerüst zum Auswalzen von Stranggussbrammen zu Vorbändern in mindestens einer Walzstufe, einem mit klappbaren, wärmeisolierenden Abdeckhauben versehenem Rollgangsabschnitt (5), einer Richteinheit (6) zum. Richten der Vorbänder, einer induktiven Erwärmungseinrichtung (7) zur geregelten Anwärmung der Vorbänder auf eine definierte Temperatur über die Vorbandlänge und -breite, einer Schere (8) zum Schopfen der Vorbandköpfe oder zum Häckseln, einem Zunderwäscher (9) zum Entzundern der Vorbänder, einer mehrgerüstigen Fertigstraße (10) zum Auswalzen der Vorbänder zu Fertigbändem, einem Auslaufrollgang mit einer Einrichtung zum Kühlen (11) der Fertigbänder und mit einer oder mehreren der Fertigstraße (10) nachgeordneten Wickelmaschinen (12) zum Aufwickeln des Fertigbandes.

## Claims

1. Method of producing flat products of steel, inclusive of larger width, from continuously cast slabs of large or medium thickness or from thin strips, in a single-stand or multi-stand blooming train (4), a roller path (3) for transporting the flat product and in a given case for reversing, by way of a roller section (5) provided with pivotable, thermally insulating cover hoods, an inductive heating device (7) for regulated warming up of pre-strips to a defined temperature over the pre-strip length and pre-strip width, in a multi-stand finishing train (10), an outlet roller path with devices (11 ) for cooling the flat product as well as in downstream coiling machines (12) for coiling up the finished strip, wherein a fine-grained structure of the grain size category 6 - 10 according to DIN 50601 is produced by austenitic, austenitic-ferritic or ferritic rolling of low-carbonised or deep-carbonised steels, and the rolling takes place in the two-phase region in the finishing train (10) with a total decrease up to approximately 80% in order to achieve high strength values, **characterised in that** one or more slabs of carbon steels with medium carbon contents of approximately 0.2 to 0.8% or alloyed case-hardening or tempering steels are rolled into one or more pre-strips in the single-stand or double-stand blooming train (4) in two stages with a pause for intermediate cooling by reversing on the roller path (3), the pre-strips are heated to a defined temperature over the length and width by the combined effect of covering hoods and heating device (7) and rolled into thin, high-strength finished strips in the multi-stand finishing train (10) in the two-phase region, wherein through the rolling temperature, which lies in the upper austenite range, of the first shaping step in the blooming train (4) at an overall reduction of 40 to 70% the continuously cast structure is converted into a rolled structure by complete recrystallisation and wherein through the fine-grained and in part compacted structure the conversion starting temperature of the transition into the two-phase region is increased and, in order to reduce the shaping resistances in the finishing train (10), the conversion time is shortened, and that according to the respective thickness and length of the pre-strip, the thickness of the finished strip, the intake speed into the finishing train (10) and the cooling effect of a scale washer (9) in front of the finishing train (10) the pre-strip is so adjusted over its length and width uniformly to a targeted temperature by the combined effect of the closed cover hoods (5) and the inductive heating device (7) that rolling in the finishing train (10) takes place in the two-phase region in all passes.

2. Method according to claim 1, **characterised in that** the start temperature of the second shaping stage, the pause time between first and second shaping stage in the blooming train (4) and the total rolling time of the second shaping stage are so optimised that during transportation of the pre-strip by the blooming train (4) to the finishing train (10) no further pause for intermediate cooling, by reversing, to the entry temperature of the pre-strip in the finishing train (10) is required.

3. Method according to one of claims 1 and 2, **characterised in that** the multiple of the total time for the second shaping stage in the blooming train (4), the transportation of the pre-strip to the finishing train (10) and the rolling in the finishing train (10), which is smaller than the pause time between first and second shaping stage in the blooming train (4), determines the number of slabs which are rolled in the blooming train (4) in the first shaping stage in succession when the cover hoods (5) is opened and are reversed behind the blooming stand (4) for intermediate cooling on the roller path (3).

4. Method according to one of claims 1 to 3, **characterised in that** the intermediate strips intermediately cooling after the first shaping stage in the blooming train (4) are, after expiry of the intermediate cooling time of the first intermediate strip up to this itself, moved as a group or individually in succession from the position on the roller path (3) behind the blooming stand (4) to a position on the roller path (3) in front of the blooming stand (4) by reversing for further intermediate cooling without pass reduction and subsequently the first intermediate strip is rolled in the second shaping stage on the blooming stand (4), whereafter the other intermediate strips follow with the same cooling time.

5. Method according to one of claims 1 to 4, **characterised in that** the reversing of the intermediate strips during intermediate cooling behind and in front of the blooming train (4) is ensured by separately driven, synchronised roller path groups.

6. Method according to one of claims 1 to 5, **characterised in that** the finished strip rolled in the finishing train (10) in the two-phase region is cooled on the outlet roller path (3) to a defined coiling temperature in order to obtain or qualitatively increase the combination of mechanical properties achieved during rolling.

7. Method according to one of claims 1 to 6, **characterised by** the austenitic, austenitic-ferritic and ferritic rolling of low-carbonised and deep-carbonised steels.

8. Plant for producing flat products of steel, inclusive of large width, from continuously cast slabs, consisting of a casting machine (15) for producing continuously cast slabs, a cutter (14) for dividing the slabs, a warming-up or compensating oven (13) for warming up slabs used cold or hot or for compensating thin strips to rolling start temperature, a scale washer (2) for descaling the warmed-up or compensated continuously cast slabs, a single-stand or double-stand blooming train (4) with coverable roller path (3), a roller path (3) with separately driven and synchronised roller path sections for transport of the slabs or the flat product in rolling direction and in a given case for reversing of intermediate strips for intermediate cooling, a single-stand or double-stand blooming train (4) with or without an upsetting stand for rolling out continuously cast slabs to form pre-strips in at least one rolling stage, a roller path section (5) provided with pivotable, thermally insulating cover hoods, a straightening unit (6) for straightening the pre-strips, an inductive heating device (7) for regulated warming-up of pre-strips to a defined temperature over the pre-strip length and width, a cutter (8) for cropping the pre-strip heads or for chopping, a scale washer (9) for descaling the pre-strips, a multi-stand finishing train (10) for rolling out the pre-strips into finished strips, an outlet roller path with a device (11) for cooling the finished strips and with one or more coiling machines (12), which are arranged downstream of the finishing train (10), for coiling up the finished strip.

## Revendications

1. Procédé pour la production de produits plats en acier, y compris de grande largeur, à partir de brames coulées en continu de grande épaisseur ou d'épaisseur moyenne ou de brins minces, dans un train dégrossisseur (4) à une ou plusieurs cages, un train de rouleaux (3) pour le transport du produit plat et le cas échéant pour l'inversion, via une section (5) de train de rouleaux pourvue d'un capot de recouvrement basculant, isolant thermiquement, un dispositif de chauffage (7) par induction pour le chauffage régulé d'ébauches de bande à une température définie sur la longueur et la largeur de l'ébauche de bande, dans un train finisseur (10) à plusieurs cages, un train de rouleaux de sortie avec des dispositifs (11) pour le refroidissement du produit plat ainsi que dans des bobineuses (12) disposées en aval pour l'enroulement de la bande finie, en produisant, par un laminage austénitique, austénitique-ferritique ou ferritique, d'aciers à faible teneur en carbone ou à basse teneur en carbone, une structure à grains fins de la classe de grosseurs de grains 6-10 selon la norme DIN 50601, et le laminage étant réalisé dans la zone à deux phases dans le laminoir (10) à une réduction totale jusqu'environ 80% pour atteindre des valeurs de résistance élevées, **caractérisé en ce qu'**une ou plusieurs brames en acier au carbone avec des teneurs moyennes en carbone d'environ 0,2 à 0,8% ou en aciers de cémentation ou de traitement alliés, sont laminées dans un train dégrossisseur (4) à une ou deux cages, en deux étapes avec une pause pour le refroidissement intermédiaire par inversion sur le train de rouleaux (3) en une ou plusieurs ébauches de bande, les ébauches de bande sont chauffées par l'effet combiné des capots de recouvrement et du dispositif de chauffage (7) à une température définie sur la longueur et la largeur et elles sont laminées dans le train finisseur (10) à plusieurs cages dans la zone à deux phases en bandes finies minces, hautement résistantes, où, par la température de laminage située dans la plage austénitique supérieure de la première étape de transformation dans le train dégrossisseur (4), à une diminution totale de 40 à 70%, la structure du brin coulé est transformée en une structure de laminage par une recristallisation complète et où, par la structure à grains fins et partiellement solidifiée, la température de départ de la transformation du passage à la zone à deux phases est augmentée et le temps de transformation est raccourci pour diminuer les résistances de transformation dans le train finisseur (10) et **en ce que**, en fonction de l'épaisseur et de la longueur de l'ébauche de bande, de l'épaisseur de la bande finie, de la vitesse d'introduction dans le train finisseur (10) et de l'effet de refroidissement d'un laveur de calamine (9) en amont du train finisseur, l'ébauche de bande est réglée sur sa longueur et largeur par l'effet combiné de capot de recouvrement (5) fermé et du dispositif de chauffage (7) par induction, régulièrement à une température ciblée de telle manière que le laminage dans le train finisseur (10) est réalisé dans la zone à deux phases dans toutes les passes.

2. Procédé selon la revendication 1, **caractérisé en ce que** la température de départ de la deuxième étape de transformation, le temps de pause entre la première et la deuxième étape de transformation dans le train dégrossisseur (4) et le temps de laminage total de la deuxième étape de transformation sont optimisés de telle manière qu'il ne faut pas d'autre pause pendant le transport de l'ébauche de bande du train dégrossisseur (4) au train finisseur (10) pour le refroidissement intermédiaire par inversion à la température d'entrée de l'ébauche de bande dans le train finisseur (10).

3. Procédé selon l'une quelconque des revendications 1 ou 2, **caractérisé en ce que** le multiple du temps total pour la deuxième étape de transformation dans le train dégrossisseur (4), le transport de l'ébauche de bande vers le train finisseur (10) et le laminage dans le train finisseur (10), qui est inférieur au temps de pause entre la première et la deuxième étape de transformation dans le train dégrossisseur (4) détermine le nombre de brames qui sont laminées successivement dans le train dégrossisseur (4) dans la première étape de transformation avec les capots (5) ouverts et qui sont inversés en aval de la cage de dégrossissage (4) pour le refroidissement intermédiaire sur le train de rouleaux.

4. Procédé selon l'une quelconque des revendications 1 à 3, **caractérisé en ce que** les bandes intermédiaires qui refroidissent de manière intermédiaire après la première étape de transformation dans le train dégrossisseur (4), à la fin du temps de refroidissement intermédiaire de la première bande intermédiaire, sont déplacées, à l'exception de celle-ci, sous forme de groupe ou individuellement l'une derrière l'autre, de la position sur le train de rouleaux (3) en aval de la cage de dégrossissage (4) vers une position sur le train de rouleaux (3) en amont de la cage de dégrossissage (4) sans diminution de passe en vue d'un refroidissement intermédiaire supplémentaire par inversion et ensuite la première bande intermédiaire est laminée dans la deuxième étape de transformation sur la cage de dégrossissage (4), les autres bandes intermédiaires suivant à un temps de refroidissement identique.

5. Procédé selon l'une quelconque des revendications 1 à 4, **caractérisé en ce que** l'inversion des bandes intermédiaires lors du refroidissement intermédiaire en aval et en amont de la cage de dégrossissage (4) est assurée par des groupes de trains de rouleaux entraînés séparément, synchronisés.

6. Procédé selon l'une quelconque des revendications 1 à 5, **caractérisé en ce que** la bande finie laminée dans le train finisseur (10) dans la zone à deux phases est refroidie sur le train de rouleaux de sortie (3) à une température de bobinage définie afin d'obtenir ou d'augmenter en qualité la combinaison de propriétés mécaniques obtenues lors du laminage.

7. Procédé selon l'une quelconque des revendications 1 à 6, **caractérisé par** le laminage austénitique, austénitique-ferritique et ferritique d'aciers à faible et basse teneur en carbone.

8. Installation pour la production de produits plats en acier, y compris de grande largeur, à partir de brames coulées en continu, constituée par une machine de coulée (15) pour la production de brames coulées en continu, une cisaille (14) pour couper les brames, un four de chauffage ou d'équilibrage (13) pour le chauffage de brames utilisées à chaud ou à froid ou pour l'équilibrage de brins fins à la température de départ de laminage, un laveur de calamine (2) pour le décalaminage des brames coulées en continu chauffées ou équilibrées, un train dégrossisseur (4) à une ou deux cages avec un train de rouleaux (3) pouvant être fermé, un train de rouleaux (3) avec des sections de train de rouleaux entraînées séparément et synchronisées pour le transport des brames ou du produit plat dans le sens du laminage et le cas échéant pour l'inversion des bandes intermédiaires lors du refroidissement intermédiaire, un train dégrossisseur (4) à une ou deux cages, avec ou sans cage de refoulement pour le laminage de brames coulées en continu en ébauches de bande en au moins une étape de laminage, une section (5) de train de rouleaux pourvue d'un capot de recouvrement basculant, isolé thermiquement, une unité de dressage (6) pour redresser les ébauches de bande, un dispositif de chauffage (7) par induction pour le chauffage régulé des ébauches de bande à une température définie sur la longueur et la largeur de l'ébauche de bande, une cisaille (8) pour ébouter la tête de l'ébauche de bande ou pour hacher, un laveur de calamine (9) pour le décalaminage des ébauches de bande, un train finisseur (10) à plusieurs cages pour le laminage des ébauches de bande en bandes finies, un train de rouleaux de sortie avec un dispositif pour le refroidissement (11) des bandes finies et avec une ou plusieurs bobineuses (12) disposées en aval du train finisseur (10) pour enrouler la bande finie.
